Europäisches Patentamt

European Patent Office

Office européen des brevets

(11) Publication number: **0 190 495 B1**

## (12) EUROPEAN PATENT SPECIFICATION

(45) Date of publication of patent specification: **01.04.92**

(51) Int. Cl.5: **B01J 20/26**, B01D 53/34, B01D 15/08, C01C 3/20

(21) Application number: **85308906.8**

(22) Date of filing: **06.12.85**

(54) **Polymer gel and use thereof for separating components from liquid resulting from desulfurization and decyanization process.**

(30) Priority: **06.12.84 JP 258730/84**
**23.07.85 JP 163744/85**

(43) Date of publication of application:
**13.08.86 Bulletin 86/33**

(45) Publication of the grant of the patent:
**01.04.92 Bulletin 92/14**

(84) Designated Contracting States:
**DE FR GB NL SE**

(56) References cited:
**DD-A- 3 721**
**US-A- 3 887 688**

**Patent Abstracts of Japan vol.1, no. 27 (C-76)**
**(1216) 28 March 1977;& JP-A-51139600**

(73) Proprietor: **JAPAN EXLAN COMPANY, LTD.**
**2-8, Dojimahama-2-chome Kita-ku**
**Osaka-shi Osaka 530(JP)**

(72) Inventor: **Kobashi, Toshiyuki**
**1-6, Saidaiji Kami 3-chome**
**Okayama(JP)**
Inventor: **Naka, Hideo**
**794-14, Kanada**
**Okayama City Okayama Pref.(JP)**
Inventor: **Takeuchi, Jinya**
**755-6, Asagoe**
**Okayama(JP)**

(74) Representative: **Geering, Keith Edwin et al**
**REDDIE & GROSE 16 Theobalds Road**
**London WC1X 8PL(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a gel for the separation of useful components from a rhodanate-containing liquid product of a detoxification treatment and to a method of separation using said gel.

Hydrogen cyanide and hydrogen sulfide which are regarded as causes of air pollution and water contamination are most often contained in fuel gases such as coke oven gas and cracked crude oil gas and in various unpurified raw gases. In order to remove such toxic substances from these gases, various desulfurization and decyanization methods have been proposed. Among others, the detoxification treatment described in "Kagaku Kogyo" (Chemical Industry) vol.23, no.7, p 922-927 (1972) is regarded as most practical. This method is a combination of Fumacks desulfurization method and Rhodacks decyanization method. The former is a wet type desulfurization method and sulfur recovery system in which hydrogen sulfide in the gas is separated and removed as sulfur by using as a catalyst an aromatic polynitro compound such as picric acid, nitro-phenol, trinitrobenzoic acid, nitro compounds of resorcin, etc. or a quinone type catalyst such as sodium naphthoquinone sulfonate, sodium anthraquinone sulfonate, etc. The latter is a decyanization method in which HCN, which is very toxic, is fixed and removed as a non-toxic rhodanate by washing the hydrogen cyanide-containing gas with an alkaline sulfur suspension. By this combination, the hydrogen cyanide and hydrogen sulfide in the gas are removed at high efficiency. In this detoxification method, the treatment liquid taken out of the reaction system contains, besides the rhodanate, inorganic oxyacid salt of sulfur as by-product. Furthermore, when aromatic polynitro compound is used as a catalyst, it and its reduction product are also contained in the treatment liquid product, which then assumes a deep red colour so that it is not desirable to discharge it into rivers. Rather, the rhodanate and oxyacid salt of sulfur contained in the product liquid are useful as industrial chemicals and it is desirable to separate them for their respective uses. As a method of separating the useful components, i.e. the rhodanate and oxyacid salt of sulfur, the Applicant proposed a method which was described in Japense Publication No.4000/78.

The cross-linked dextran gel used in this method is obtained by cross-linking dextran dissolved in water with epichlorhydrin in a reversed phase suspension system. As apparent from its production method and physical properties, the gel is a "soft gel" and has inferior mechanical strength. Therefore the gel, when used in a large scale industrial apparatus, cannot display its ability sufficiently because of its destruction and compression. This necessarily creates difficulty in increasing treating capacity, since, for example, there is a limit to increase of rate of liquid passage. Whilst for increasing separation ability it is generally effective to use a gel of smaller particle diameter, this results in increased operation pressure, contrarily obliging use of gel of large diameters to give small pressure loss. Overall, the use of cross-linked dextran gel gives unsatisfactory separation results, with the concentrations of the useful components in the eluate becoming uneconomically low. In addition, in operation on an industrial scale it is difficult to prevent entry into the treatment liquid of suspended particles which clog the packed gel layer and inevitably increase the operation pressure. When using the cross-linked dextran gel, back washing the packed gel layer to remove the blockage due to the suspended particles must be conducted frequently; this substantially shortens working time and is deleterious to the dextran gel which is mechanically weak.

In the aqueous solution remaining after the recovery of the rhodanate, there are various catalyst components useful in the desulfurization and decyanization processes, and alkaline substances. The discard or loss of such useful components is not desirable for the operation of the desulfuization and decyanization processes from the industrial viewpoint. US-A-3887688 also discloses using a cross-linked dextran layer for separation of components from a liquid, though only removal of impurities from thiocyanate is concerned, with no mention of separating rhodanate from detoxification liquid.

The present invention provides a gel which exhibits good ability to separate useful components from a rhodanate-containing detoxification treatment liquid product and which has improved resistance to pressure, life, treating ability and working period. It also provides an economical process which enables the recovery and reuse of catalyst and alkali by returning liquid from which the rhodanate has been separated to the detoxification (desulfurization and decyanization) treatment.

The gel according to the present invention is of a cross-linked polymer more than 50 weight %, desirably more than 60 weight %, and more desirably more than 70 weight %, of whose repeating units are selected from 2,3-dioxypropyl (meth)acrylate and 2,3-dioxypropyl (meth)allyl ether moieties. Moreover, it is necessary that the average particle diameter of this polymer be more than 10 $\mu$, preferably from 30 to 150 $\mu$, and that the gel water content be from 30 to 150%, preferably from 50 to 100%. The method of the invention involves gel filtration using the substantially nonionic hydrophilic gel to separate the rhodanate and other components from an aqueous solution containing the rhodanate as the main component and obtained by detoxifying (desulfurizing and decyanizing) gas containing hydrogen cyanide and hydrogen sulfide, and optionally then recovering the rhodanate and recycling the other components to the detoxification processes. As far as a gel according to the invention can be obtained, any method may be employed for its production without limitation. A hard (mechanically strong) gel can be obtained by increasing the ratio of cross-linking monomer used. Increasing the ratio of cross-linking monomer lowers the gel water content which is an especially important characteristic for the present invention. Therefore, by using cross-linking monomer in combination with diluent which is a slightly water-soluble or water-insoluble organic solvent, the desired gel can be produced industrially advantageously.

As cross-linking monomer, 3 to 30 weight % of addition polymerizable monomer(s) having 2 or more carbon-carbon double bonds, such as divinyl benzene, ethylene glycol dimethacrylate, diethylene glycol dimethacrylate, polyethylene glycol dimethacrylate, N,N'-methylenebisacrylamide, etc., is preferred. If desired, other monomer(s) such as vinyl halides and vinylidene halides, (meth)acrylic acid and salts thereof, (meth)acrylic acid esters, vinyl esters, acrylamide, styrene, ethylenically unsaturated sulfonic acids and salts thereof can be used. The methods of gel production are described in detail in Japanese published Patent Applications Nos.165547/85 and 232104/84 (GB 2143243A).

One technique according to the invention for separating useful components from rhodanate-containing detoxification treatment liquid product is as follows :

After the detoxification treatment liquid product has been supplied to the gel according to the invention, which retains useful components thereof, an eluent is passed through the gel layer. The eluate flows out carrying, in order, inorganic oxyacid salts of sulfur, part of the coloured components from the liquid product, rhodanate, and then the remaining coloured components. The eluate containing inorganic oxyacid salts of sulfur is first separated and collected; then the first coloured components flow away together with the eluate; the rhodanate-containing eluate which follows is separated and collected; and finally the remaining coloured components flow away. By this method, it is possible to separate the useful components industrially with good efficiency.

It is desirable that the supply of the detoxification treatment liquid product should be less than 30%, preferably from 5 to 20%, of the volume of the gel packed in the column. The supply rate of the eluent (water, dimethylformamide, methanol, etc.) to the column is e.g. at a superficial linear velocity based on empty column of 0.5 cm/min to 5 cm/min, preferably from 1 cm/min to 3 cm/min.

The rhodanates usually present in the detoxification treatment liquid products include the alkali metal, alkaline earth metal and ammonium salts. The kind of rhodanate varies depending on the kind of chemical used in the detoxification treatment, but most often the liquid contains ammonium rhodanate. Similarly, as oxyacid salts of sulfur, various sulfates, sulfites, etc. can be cited, but most often the liquid contains ammonium sulfate, ammonium thiosulfate, etc.

Of the components thus separated and collected, the rhodanate can be concentrated, and supplied for various industrial uses as a concentrated solution or in the form of crystals.

The remaining separated and collected components can be recycled to the treatment liquid for the desulfurization and decyanization (detoxification) of gas containing hydrogen sulfide and hydrogen cyanide.

Since the detoxification treatment liquid product supplied for gel filtration separation is diluted by elution with water, the eluted liquid to be returned for reuse as absorbing liquid in the desulfurization and decyanization processes may be 2 to 7 times the volume of the liquid supplied, depending on the gel filtration conditions. If necessary, the balance of the absorbing liquid can be maintained by concentrating the eluted liquid (e.g. by evaporation or membrane separation) prior to returning it to the desulfurization and decyanization processes - and/or by concentrating the supplied liquid before gel filtration separation so as to increase the concentration and reduce the volume of the eluate.

We do not fully understand why the gel of the present invention exhibits good ability in the separation of useful components from the rhodanate-containing detoxification treatment liquid product. However, we suppose that, by the combined effects of various characteristics of the gel including the quantity of the main repeating units composing the cross-linked polymer and that of the cross-linking monomer, the gel water content resulting therefrom, the particle diameter of the polymer and the voids existing inside the polymer particles, and by the absorptive action between the eluent molecules and the gel, and a molecular sieve effect, the useful components can be clearly separated and eluted.

It is a striking effect of the present invention that it makes it possible to separate and collect, industrially advantageously, the rhodanate existing in the liquid from detoxification treatment of hydrogen cyanide and hydrogen sulfide contained in fuel gases such as coke oven gas and cracked crude oil gas, and enables the recovery of the catalysts and alkalis in this liquid for reuse in the desulfurization and decyanization processes, thereby markedly reducing the operational costs of the detoxification treatment.

It is also a characteristic advantage of the present invention that it provides a gel which makes it possible to recover the useful components at high concentration because of its excellent separation ability (sharp peak of the elution curve), which has operational and economical advantages resulting from its prolonged life and working periods due to its excellent mechanical strength, and which has improved treating ability due to its high resistance to pressure.

Furthermore, the gel and the method of separation according to the present invention have made it possible to advantageously collect rhodanates which can be widely used for the production of the solvent to produce acrylic fibres, for the production of synthetic resins, for the dyeing industry, and as antiseptics, antioxidants, photographic sensitizers, etc.

The following Examples illustrate the invention but are not to be taken as limiting its scope. In the Examples, parts and percentages are by weight unless otherwise indicated.

The gel water content herein is obtained as follows : Polymer particles sufficiently brought into equilibrium with deionized water are put into a centrifuge having a centrifugal effect of 2000 G for 5 minutes to remove the water on the surface of the particles. Thereafter, the weight ($W_1$) of the polymer particles is measured and then the weight after drying is measured ($W_2$). The gel water content is calculated by the following formula :

$$\text{Gel water content} = \frac{W_1 - W_2}{W_2} \times 100 \ (\%)$$

## EXAMPLE 1

Twenty parts of a water-soluble copolymer of methacrylic acid/sodium p-styrene sulfonate (70/30) and two parts of polyvinyl alcohol (degree of polymerization:1000; degree of saponification:87%) were dissolved in 656 parts of water, and the solution was charged into a polymerization vessel equipped with a paddle stirrer.

Thereafter, two parts of 2,2-azobis-(2,4-dimethylvaleronitrile) were dissolved in a mixture of 178 parts of glycidyl methacrylate, 22 parts of ethylene glycol dimethacrylate and 120 parts of epichlorhydrin, and the solution was charged into the polymerization vessel. The whole solution was then polymerized at 60°C for 3 hours.

Then, five parts of formic acid were added to the polymerization solution and the solution was heat-treated at 90°C for three hours. A water-swollen bead-like polymer having a gel water content of 63% was obtained.

The polymer particles were sieved and the particles of intermediate size between 200 and 350 mesh size were selected. The particles were packed into a column 5 cm in inner diameter and 50 cm in height. One hundred ml of a waste liquid from coke oven gas treatment (containing about 15% ammonium rhodanate, about 8% ammonium thiosulfate, about 0.5% ammonium sulfate and a small quantity of picric acid catalyst) was supplied to the column. Deionized water, as the eluent, was passed through the column at a rate of 30 ml/min, with separation of a first eluate (a mixed aqueous solution of ammonium thiosulfate and ammonium sulfate) from a subsequent eluate (an aqueous solution of ammonium rhodanate).

After the above separating operation had been repeated 40 times, the operational pressure had increased. Therefore, deionized water was passed through the column from the reverse side for three hours; thereafter, the separating operation was resumed, both the pressure and the separating power having been restored to normal by the backwash.

For purposes of comparison, the same separating operation was conducted except that Sephadex G-10 (a cross-linked dextran gel produced by Pharmacia Fine Chemicals) was used. After the separating operation had been repeated 22 times, the pressure had increased to such an extent that almost no eluate flowed out, and thus operation became impossible.

In Table 1 are shown the concentration and the recovery ratio of the ammonium rhodanate solution obtained in each test.

TABLE 1

| kind of gel | Ammonium rhodanate | |
|---|---|---|
| | Concentration (%) | Recovery ratio |
| Gel of the invention | 6.8 | More than 97% |
| Sephadex G-10 for comparison | 4.2 | 94% |

From the above results, it is understood that the gel of the present invention has excellent separating ability and industrial advantages such as high resistance to pressure, long working life, etc.

EXAMPLE 2

A bead-like polymer produced and sieved out in the same way as described in Example 1 was packed into a column of 80 cm inner diameter and 100 cm high. From the top of the column was supplied 51.2 litres of a waste liquid from the treatment of coke oven gas and containing about 15% ammonium rhodanate, about 2% ammonium thiosulfate, about 0.5% ammonium sulfate, slight quantities of picric acid catalyst, ammonium carbonate, ammonium hydrosulfide, and ammonium sulfide. Thereafter, deionized water as eluent was passed through the column at a rate of 10.2 litres/min.

The eluate (I) emerging between 15 minutes and 27 minutes after the beginning of the passage of the eluent, and the eluate (II) emerging between 27 minutes and 40 minutes after were recovered separately.

The ammonium rhodanate concentration of the recovered liquid (II) was 5.7%. After concentrating and crystallizing it, ammonium rhodanate in solid form with a purity of 98.5% was obtained. This rhodanate purity is satisfactory for its use for example as a solvent for the production of acrylic synthetic fibres.

The recovered liquid (I) was returned to the desulfurization process as a supplement to the absorbing liquid.

By repeating this operation to treat the waste liquid extracted from the desulfurization and decyanization processes, it was possible to recover ammonium rhodanate of high purity and save about 45% of the amount of the picric acid catalyst used in the desulfurization process. Also the conventional waste liquid disposal became unnecessary.

The invention thus provides a method of separating useful components from a rhodanate-containing detoxification treated liquid, characterised by separateing the rhodanate, by gel filtration, from an aqueous solution containing a rhodanate as the main component and obtained by the desulfurization and decyanization treatment of a gas containing hydrogen sulfide and hydrogen cyanide, and by reusing the aqueous solution containing the remaining components as the desulfurization and decyanization treatment liquid.

**Claims**

1. A gel for the separation of useful components from a rhodanate-containing liquid resulting from a detoxification process, the gel being of a cross-linked polymer more than 50 weight % of whose repeating units are selected from 2,3-dioxypropyl (meth)acrylate and 2,3-dioxypropyl (meth)allyl ether moities, the gel having an average particle diameter of more than 10 $\mu$ and a water content of from 30 to 150%.

2. A gel according to claim 1 of a cross-linked polymer more than 70 weight % of whose repeating units are selected from said moieties.

3. A gel according to claim 1 or 2 having an average particle diameter of from 30 to 150 $\mu$.

4. A method of treating rhodanate-containing liquid from a desulfurization and decyanization process, the method comprising separating the rhodanate component from the liquid by gel filtration using a gel according to any preceding claim.

5. A method according to claium 4 wherein other components eluted from the gel separately from the rhodanate are recycled for use in the desulfurization step.

**Revendications**

1. Gel destiné à la séparation de constituants utiles d'un liquide contenant un rhodanate, résultant de la mise en oeuvre d'un procédé de détoxification, ce gel étant un gel d'un polymère réticulé dont plus de 50 % en poids des motifs répétés sont choisis entre des groupements (méth)acrylate de 2,3-dioxypropyle et éther (méth)allylique de 2,3-dioxypropyle, ce gel ayant un diamètre moyen de particules supérieur à 10 $\mu$m et une teneur en eau de 30 à 150 %.

2. Gel suivant la revendication 1, constitué d'un polymère réticulé dont plus de 70 % en poids des motifs répétés sont choisis entre les groupements mentionnés.

3. Gel suivant la revendication 1 ou 2, ayant un diamètre moyen de particules de 30 à 150 $\mu$m.

4. Procédé de traitement d'un liquide contenant un rhodanate, provenant de la mise en oeuvre d'une opération de désulfuration et de décyanuration, procédé consistant à séparer le rhodanate du liquide par filtration sur gel, au moyen d'un gel suivant l'une quelconque des revendications précédentes.

5. Procédé suivant la revendication 4, dans lequel d'autres constituants élués du gel séparément du rhodanate sont recyclés pour être utilisés dans l'étape de désulfuration.

**Patentansprüche**

1. Gel zur Abtrennung von brauchbaren Bestandteilen aus einer Rhodanat-enthaltenden aus einem Entgiftungsverfahren resultierenden Flüssigkeit, wobei das Gel aus einem quervernetzten Polymer besteht, von dem mehr als 50 Gew.-% aus sich wiederholenden Einheiten aus 2,3-Dioxypropyl(meth)-acrylat- und 2,3-Dioxypropyl(meth)allylethergruppen ausgewählt sind, und wobei das Gel einen mittleren Teilchendurchmesser von mehr als 10 $\mu$m und einen Wassergehalt von 30 bis 150% aufweist.

2. Gel gemäß Anspruch 1 aus einem quervernetzten Polymer, von dem mehr als 70 Gew.-% aus sich wiederholenden Einheiten aus diesen Gruppen ausgewählt sind.

3. Gel gemäß Anspruch 1 oder 2 mit einem durchschnittlichen Partikeldurchmesser von 30 bis 150 $\mu$m.

4. Verfahren zur Behandlung einer Rhodanat-enthaltenden Flüssigkeit aus einem Entschwefelungs- und Decyanisierungsverfahren, wobei das Verfahren das Abtrennen der Rhodanatkomponente aus der Flüssigkeit mittels Gelfiltration unter Verwendung eines Gels gemäß irgendeinem vorhergehenden Anspruch umfaßt.

5. Verfahren gemäß Anspruch 4, bei dem andere, von dem Gel getrennt von dem Rhodanat eluierte Bestandteile zur Verwendung im Entschwefelungsschritt recyclisiert werden.